# FASCICULE DE BREVET EUROPEEN

(11) **EP 1 073 571 B1**
(45) Date de publication et mention de la délivrance du brevet: **01.10.2003**
(21) Numéro de dépôt: 99914631.9
(22) Date de dépôt: 15.04.1999
(51) Int. Cl.: B60T 13/573

(54) **SERVOMOTEUR PNEUMATIQUE A AUTO-ASSISTANCE CONTROLEE EN EFFORT**
UNTERDRUCKBREMSKRAFTVERSTÄRKER MIT KRAFTGEREGELTER AUTOMATISCHER UNTERSTÜTZUNG
PNEUMATIC SERVOMOTOR WITH FORCE-CONTROLLED SELF-BOOSTING

(30) Priorité: 24.04.1998 FR 9805113
(43) Date de publication de la demande: 07.02.2001
(73) Titulaire: Bosch Systemes de Freinage, 93700 Drancy (FR)
(72) Inventeur: GAUTIER, Jean-Pierre, F-93600 Aulnay-sous-Bois (FR); LEBOISNE, Cédric, F-75011 Paris (FR); VERBO, Ulysse, F-93600 Aulnay-sous-Bois (FR); MEDINA, Raphael, F-93380 Pierrefitte sur Seine (FR); RICHARD, Philippe, F-77500 Chelles (FR)
(74) Mandataire: Hurwic, Aleksander Wiktor
(86) Numéro de dépôt international: FR9900938
(87) Numéro de publication internationale: WO99055569

(56) Documents cités:
- DE-C- 4 234 041
- DE-C- 4 234 043
- US-A- 5 425 302

## Description

La présente invention concerne un servomoteur pneumatique d'assistance au freinage.

Plus précisément, l'invention concerne un servomoteur pneumatique d'assistance au freinage comprenant : une enveloppe rigide; une cloison mobile délimitant, de façon étanche, une chambre avant et une chambre arrière à l'intérieur de l'enveloppe, la chambre avant étant en fonctionnement soumise à une première pression et la chambre arrière étant sélectivement reliée à la chambre avant ou soumise à une seconde pression supérieure à la première; un piston pneumatique se déplaçant avec la cloison mobile; une tige de commande se déplaçant dans le piston en fonction d'une force d'entrée sélectivement exercée suivant une direction axiale d'actionnement orientée vers la chambre avant, et d'une force de rappel exercée par un ressort principal suivant une direction axiale de retour, inverse de la direction axiale d'actionnement, la force de rappel sollicitant la tige de commande vers une position de retour, et la force d'entrée sollicitant la tige de commande vers une position d'actionnement intermédiaire ou vers une position d'actionnement extrême, selon que la force d'entrée est appliquée à une vitesse inférieure ou supérieure à une vitesse limite déterminée; un plongeur logé dans le piston et entraîné par la tige de commande; un clapet à trois voies comprenant lui-même un siège annulaire porté par une section arrière du plongeur, ce clapet reliant la chambre arrière à la chambre avant lorsque la tige de commande est en position de repos, et soumettant la chambre arrière à la seconde pression lorsque la tige de commande est dans l'une de ses positions d'actionnement; des moyens de transmission de force, propres à recevoir et transmettre au moins une force d'assistance exercée par une face avant du piston lorsque le clapet soumet la chambre arrière à la seconde pression, ces moyens de transmission de force comprenant eux-mêmes des moyens de réaction, propres à opposer à la force d'entrée une réaction dépendant de la force d'assistance, le plongeur comportant une section avant reliée à la section par un ressort secondaire.

Le document DE-A-4234041 décrit un servomoteur pneumatique d'assistance au freinage muni d'un dispositif d'assistance au freinage comportant un plongeur composé de deux éléments reliés par un ressort.

De récentes recherches ont montré que bon nombre de conducteurs, confrontés à une situation de freinage d'urgence, sous-estimaient les risques réellement encourus et, après avoir freiné brutalement, relâchaient leur effort de freinage dans des circonstances où le maintien d'un effort important était au contraire absolument indispensable pour éviter l'accident.

Ce constat a conduit au développement de solutions diverses tendant à pallier l'éventuel comportement défaillant d'un conducteur inexpérimenté ou saisi de panique,

L'invention se situe dans ce contexte et a pour but de proposer une solution simple au problème du maintien d'une force de freinage importante à la suite d'un coup de frein violent.

A cette fin, le servomoteur de l'invention, par ailleurs conforme à la définition qu'en donne le préambule ci-dessus, est essentiellement caractérisé en ce qu'un ressort secondaire exerçe, entre les sections avant et arrière, une force de contact mutuel inférieure à la force de rappel, et en ce que la section avant et les moyens de transmission de force comprennent des moyens respectifs de retenue réversible, propres à assujettir la section avant au piston lorsque la force d'assistance dépasse un seuil déterminé alors que la tige de commande est dans sa position d'actionnement extrême.

Dans un mode de réalisation possible de l'invention, les moyens de retenue comprennent une couche annulaire élastique axialement soumise à la force d'assistance, cette couche présentant une épaisseur axiale et un diamètre interne d'autant plus faibles que la force d'assistance est élevée.

Par exemple, les moyens de réaction comprennent un disque de réaction en matériau élastomère, les moyens de retenue comprennent un disque rigide constituant une face frontale de la section avant du plongeur, et la couche annulaire est constituée d'une surépaisseur du disque de réaction qui délimite, dans le disque de réaction, un logement propre à emprisonner le disque rigide lorsque la force d'assistance dépasse le seuil déterminé alors que la tige de commande est dans sa position d'actionnement extrême.

Dans ce cas, le logement et le disque rigide ont de préférence des formes tronconiques complémentaires.

Les moyens de retenue peuvent aussi comprendre un épaulement de la forme externe, par exemple au moins partiellement cylindrique, de la section avant.

Dans ce cas, les moyens de retenue comprennent avantageusement un insert rigide disposé dans la couche annulaire élastique et coopérant avec l'épaulement de la forme externe de la section avant pour rendre la section avant solidaire du piston lorsque la force d'assistance dépasse le seuil déterminé alors que la tige de commande est dans sa position d'actionnement extrême.

Dans un autre mode de réalisation de l'invention, les moyens de retenue comprennent un manchon rigide disposé à l'intérieur d'un manchon élastique qui délimite un logement propre à emprisonner le manchon rigide lorsque la force d'assistance dépasse le seuil déterminé alors que la tige de commande est dans sa position d'actionnement extrême.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue en coupe d'un servomoteur conforme à un premier mode de réalisation de l'invention;
- les Figures 2, 3, et 4 sont des vues en coupe détaillées d'une partie du servomoteur illustré à la figure 1, observé à différents stade de fonctionnement;
- la Figure 5 est une vue en coupe d'un servomoteur conforme à un second mode de réalisation de l'invention;
- lesFigures 6, 7, et 8 sont des vues en coupe détaillées d'une partie du servomoteur illustré à la figure 5, observé à différents stades de fonctionnement, et
- la Figure 9 est une vue en coupe de la partie arrière d'un servomoteur conforme à un troisième mode de réalisation de l'invention.

Un servomoteur pneumatique d'assistance conforme à l'invention comprend, de façon connue en soi, une coquille avant 1a et une coquille arrière 1b formant ensemble une enveloppe rigide 1.

Une cloison mobile 2 sépare de façon étanche l'intérieur de cette enveloppe rigide 1 et y délimite une chambre avant 3 et une chambre arrière 4, la chambre avant 3 étant en fonctionnement soumise à une première pression Pd, relativement basse.

Un piston pneumatique 5 se déplace avec la cloison mobile 2 et présente un moyeu 6 monté coulissant dans une ouverture 19 de l'enveloppe 1.

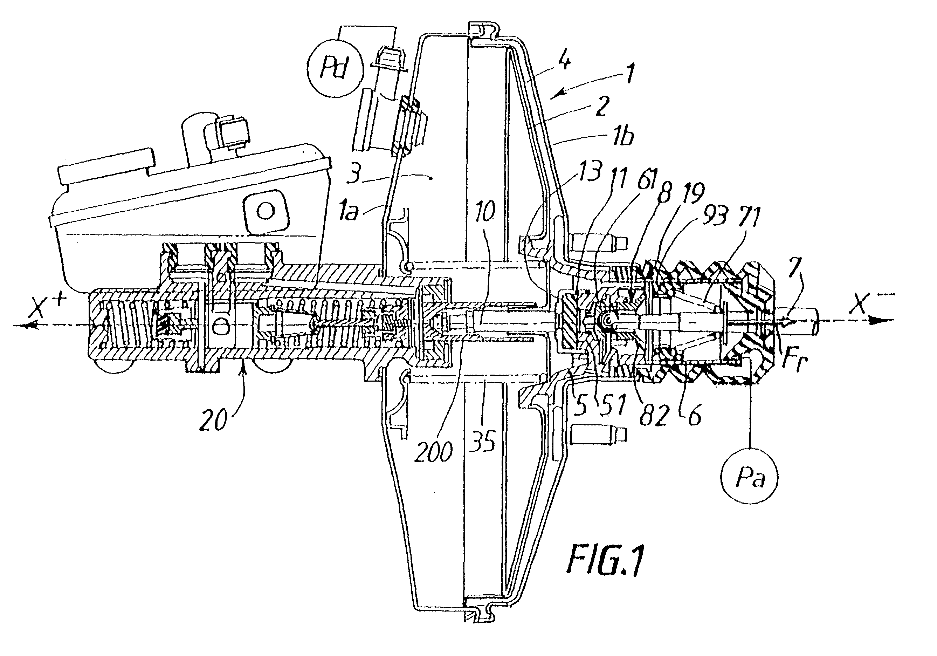

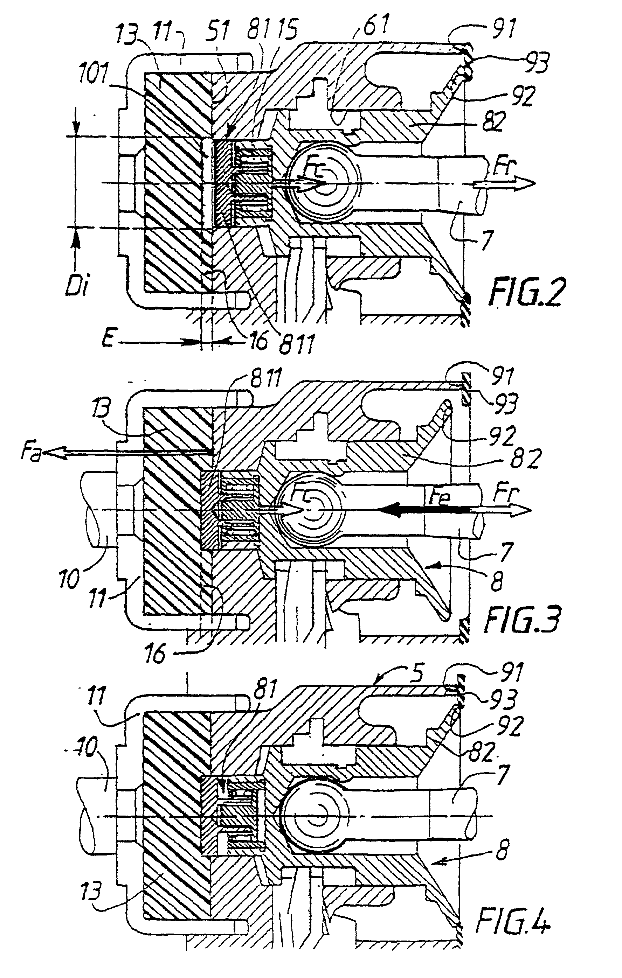

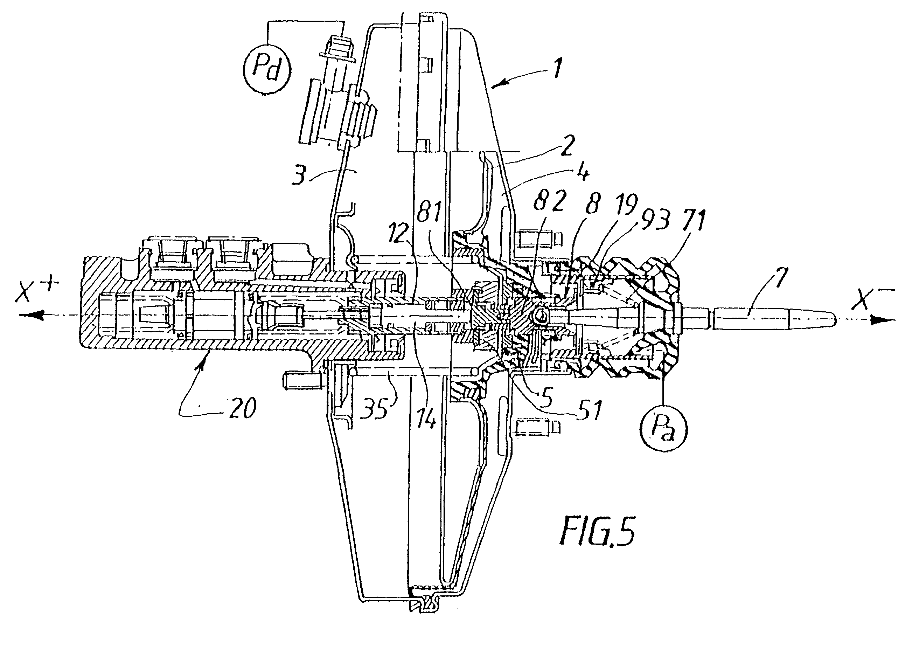

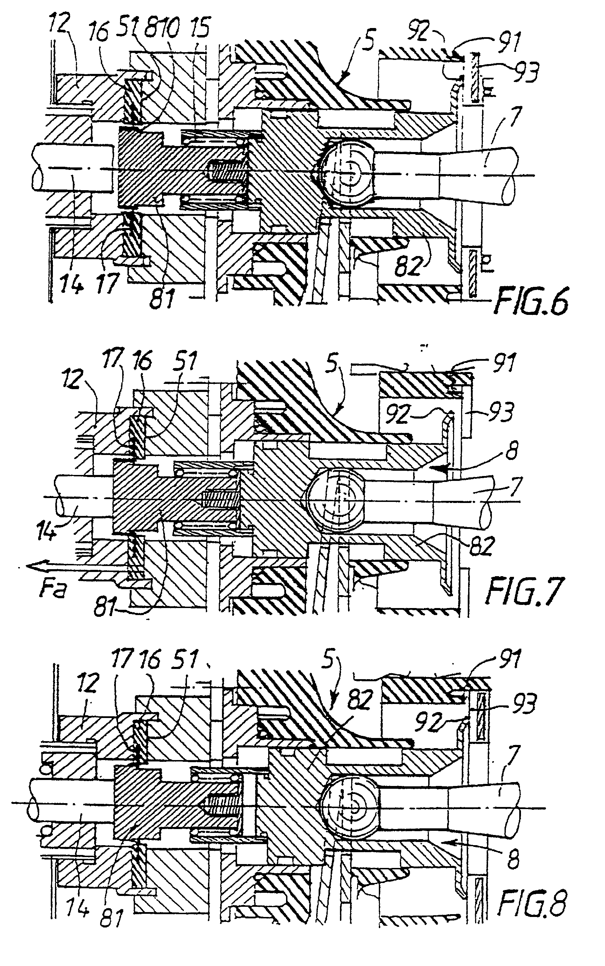

Le servomoteur est commandé par une tige de commande 7 mobile dans le moyeu 6 entre une position de repos (figures 1, 2, 5, 6 et 9) et une position d'actionnement extrême (figures 3 et 7), la position de cette tige dans le moyeu dépendant notamment à la fois d'une force d'entrée Fe qui est appliquée sur cette tige, suivant une direction axiale d'actionnement X+, par la pédale de frein (non représentée), de la vitesse avec laquelle est appliquée cette force d'entrée Fe, d'une force de rappel Fr exercée dans la direction inverse X- par un ressort de rappel principal 71, et d'une force de réaction de même sens que la force de rappel.

Lorsque la force d'entrée Fe est appliquée lentement sur la tige de commande 7, cette dernière adopte une position d'actionnement intermédiaire entre sa position de repos (figures 1, 2, 5, 6 et 9) et sa position d'actionnement extrême (figures 3 et 7), la tige de commande n'atteignant sa position d'actionnement extrême que lorsque la force d'entrée Fe est appliquée avec une vitesse supérieure à une vitesse limite donnée.

Un plongeur 8, entraîné par la tige de commande 7, est monté coulissant dans un alésage 61 du moyeu 6 pour contrôler l'état d'un clapet à trois voies 9.

Ce clapet 9 est essentiellement constitué d'un siège fixe annulaire 91 formé à la périphérie interne du moyeu 6, d'un siège mobile annulaire 92, qui est concentrique au siège fixe 91 et porté par une section arrière 82 du plongeur 8, et d'un obturateur tubulaire 93, qui est lui-même concentrique à la fois au plongeur et au moyeu.

L'obturateur tubulaire 93 présente une face frontale annulaire d'obturation destinée à coopérer, en fonction de la position du plongeur 8, soit avec le siège mobile 92, soit avec le siège fixe 91.

Lorsque le servomoteur est au repos (figures 1, 2, 5. 6 et 9), l'obturateur 93 s'applique sur le siège mobile 92 et isole la chambre arrière 4 vis-à-vis d'une source de pression, en général constituée par l'atmosphère, qui délivre une pression Pa supérieure à la pression Pd à laquelle est soumise la chambre avant 3.

En revanche, lorsqu'une force d'entrée Fe sensiblement supérieure à la force de rappel Fr du ressort 71 est exercée sur la tige 7, cette force Fe provoque un déplacement du plongeur 8 dans la direction d'actionnement X+, de sorte que l'obturateur 93 se décolle du siège mobile 92 en s'appliquant sur le siège fixe 91 (figure 3), la chambre arrière 4 se trouvant alors soumise à la pression Pa.

L'admission d'air dans la chambre arrière repousse la cloison mobile 2 dans la direction d'actionnement X+ et engendre une force d'assistance Fa qui s'exerce sur la face avant 51 du piston 5.

La force d'entrée Fe et la force d'assistance Fa sont appliquées conjointement à des organes de transmission de force qui les utilise pour actionner le maître-cylindre 20, ces organes de transmission de force comprenant des organes de réaction propres à opposer à la force d'entrée Fe une réaction dépendant de la force d'assistance Fa.

La nature spécifique des organes de transmission de force et de réaction varie selon le type de servomoteur concerné, la présente invention pouvant être mise en oeuvre quel que soit le type de réaction utilisé dans le servomoteur qu'elle équipe.

Par exemple, la figure 1 illustre un servomoteur qui utilise, de façon connue, un disque de réaction 13 constitué d'un matériau élastomère, logé dans une coupelle 11, et qui reçoit à la fois la force d'entrée Fe transmise par le plongeur 8, et la force d'assistance Fa exercée par la face avant 51 du piston pneumatique 5.

Le disque de réaction 13 oppose à la force d'entrée Fe une réaction qui varie avec la force d'assistance Fa, et la coupelle 11, qui est solidaire d'une tige de poussée 10, transmet au piston hydraulique primaire 200 du maître-cylindre 20 la résultante de ces forces, de la force de rappel Fr, et de la force élastique d'un ressort de rappel de piston 35.

La figure 5 illustre en revanche un servomoteur du type dit "à réaction hydraulique", également connu, un tel servomoteur utilisant un piston hydraulique de réaction 14 qui reçoit la force d'entrée Fe diminuée notamment de la force de rappel Fr, et qui coulisse dans un cylindre hydraulique 12 agencé pour recevoir la force d'assistance Fa exercée par la face avant 51 du piston pneumatique 5.

Selon l'invention, le plongeur 8 comporte une section avant 81 reliée à la section arrière 82 par un ressort secondaire 15, tandis que la section avant 81 du plongeur et les organes de transmission de force comprennent des moyens respectifs de retenue réversible propres à assujettir la section avant 81 au piston lorsque la force d'assistance Fa dépasse un seuil S déterminé alors que la tige de commande est dans sa position d'actionnement extrême.

Plus précisément, le ressort secondaire 15, qui est par exemple constitué d'un ressort hélicoïdal précontraint en compression, rapproche l'une de l'autre les sections avant et arrière 81, 82 en exerçant sur elles une force de contact mutuel Fc inférieure à la force de rappel Fr qu'exerce le ressort de rappel 71 de la tige de commande 7.

Dans les modes de réalisation préférés de l'invention, tels qu'illustrés, les moyens de retenue comprennent une couche annulaire élastique 16 axialement soumise à la force d'assistance Fa, cette couche 16 présentant une épaisseur axiale E et un diamètre interne Di d'autant plus faibles que la force d'assistance Fa est élevée.

Dans le cas d'un servomoteur utilisant un disque de réaction 13, tel qu'illustré aux figures 2 à 4, les moyens de retenue comprennent par exemple aussi un disque rigide 811 constituant une face frontale de la section avant 81 du plongeur 8, la couche annulaire 16 étant dans ce cas constituée d'une surépaisseur du disque de réaction 13 qui délimite, dans le disque de réaction, un logement 101 propre à emprisonner le disque rigide 811 lorsque la force d'assistance Fa dépasse le seuil S déterminé alors que la tige de commande est dans sa position d'actionnement extrême, le logement 101 et le disque rigide 811 ayant éventuellement des formes tronconiques complémentaires.

Le fonctionnement de l'invention, tel qu'il peut être exposé en référence aux figures 2 à 4, est le suivant.

Lorsque le servomoteur est au repos (figure 2), la tige de commande 7 est tirée dans la direction de retour X- par la force Fr exercée par le ressort 71, de sorte que le siège annulaire mobile 92 s'applique sur l'obturateur 93.

Dans ces conditions, la chambre arrière 4 communique avec la chambre avant 3 et se trouve isolée vis-à-vis de la pression atmosphérique Pa.

Si une force d'entrée Fe, évoluant de façon lente (état non illustré), est appliquée sur la tige de commande 7, le siège mobile 92 se sépare lentement de l'obturateur 93, ce qui ouvre la chambre arrière 4 à l'atmosphère et provoque le déplacement du plongeur 8 dans la direction d'actionnement X+.

Comme dans ce mouvement, la face avant 51 du plongeur 8 appuie sur la périphérie du disque de réaction 13, la partie centrale de ce disque, dans laquelle est formé le logement 101, est repoussée suivant la direction de retour X- jusqu'à ce qu'elle rencontre le disque rigide 811, cette partie centrale du disque de réaction exerçant alors sur le disque rigide 811 une force de réaction orientée suivant la direction inverse X-. La tige de commande est alors dans une position d'actionnement intermédiaire.

Si en revanche une force d'entrée Fe, évoluant de façon rapide (figure 3), est appliquée sur la tige de commande 7, cette dernière adopte alors sa position d'actionnement extrême et le disque rigide 811 vient s'insérer dans le logement 101 avant que le piston pneumatique 5 ait eu le temps d'appuyer sur la périphérie du disque de réaction 13.

Dans ces conditions, lorsque le piston pneumatique 5 appuie sur la couche annulaire 16 à la périphérie du disque de réaction 13, cette couche 16 est contrainte à fluer en direction du centre du disque de réaction en réduisant son diamètre interne Di, et maintient le disque rigide 811 prisonnier du logement 101.

Lorsque la pédale de frein (non représentée) est progressivement relâchée, et bien que la force d'entrée Fe diminue (figure 4), le disque rigide 811 reste prisonnier du logement 101 aussi longtemps que le siège 92 du clapet ne décolle pas l'obturateur 93 du siège fixe 91, de sorte qu'une force d'assistance maximale continue d'être appliquée au maître-cylindre 20 pendant cette phase de défreinage.

Cette force d'assistance ne cesse en fait d'être appliquée que lorsque le siège 92 du clapet a suffisamment reculé suivant la direction X- pour décoller l'obturateur 93 du siège fixe 91, la chambre arrière 4 étant alors à nouveau reliée à la chambre avant 3.

Dans le mode de réalisation des figures 5 à 8, la couche annulaire 16 est disposée entre la face avant 51 du piston pneumatique 5 et le cylindre hydraulique 12, et les moyens de retenue comprennent un épaulement 810 de la forme externe, au moins partiellement cylindrique, de la section avant 81 du plongeur 8.

Un insert rigide 17 peut en outre être disposé dans la couche annulaire élastique 16 pour coopérer avec l'épaulement 810.

Lorsque le servomoteur est au repos (figure 6) la tige de commande 7 est tirée dans la direction de retour X- par la force Fr exercée par le ressort 71, de sorte que le siège annulaire mobile 92 s'applique sur l'obturateur 93. Dans ces conditions, qui sont identiques à celles qu'illustre la figure 2, la chambre arrière 4 communique avec la chambre avant 3 et se trouve isolée vis-à-vis de la pression atmosphérique Pa.

Si une force d'entrée Fe, évoluant de façon lente (état non illustré), est appliquée sur la tige de commande 7, le siège mobile 92 se sépare lentement de l'obturateur 93, ce qui ouvre la chambre arrière 4 à l'atmosphère. La tige de commande est alors dans une position d'actionnement intermédiaire.

La mise à l'atmosphère de la chambre arrière 4 provoque à son tour le déplacement du plongeur 8 dans la direction d'actionnement X+, et corrélativement le déplacement, suivant la direction de retour X-, du piston de réaction 14, qui exerce alors sur la section avant 81 du plongeur 8 une force de réaction orientée suivant cette même direction X-.

Compte tenu du faible déplacement relatif du plongeur 8 par rapport au piston pneumatique 5, la position relative de l'épaulement 810 et de la couche annulaire 16 dans cet état du servomoteur reste pratiquement celle qu'illustre la figure 6.

Si en revanche une force d'entrée Fe, évoluant de façon rapide (figure 7), est appliquée sur la tige de commande 7, cette dernière adopte alors sa position d'actionnement extrême et l'épaulement 810 vient se placer devant l'insert 17 avant que le piston pneumatique 5 ait eu le temps d'appuyer sur le cylindre hydraulique 12, donc de faire reculer le piston de réaction 14.

Dans ces conditions, lorsque le piston pneumatique 5 appuie sur la couche annulaire 16 (figure 7), cette couche 16 est contrainte à fluer en direction de l'épaulement 810, repoussant l'insert ou chaque insert 17 vers cet épaulement et rendant ainsi la section avant 81 de plongeur 8 solidaire en translation du piston pneumatique 5.

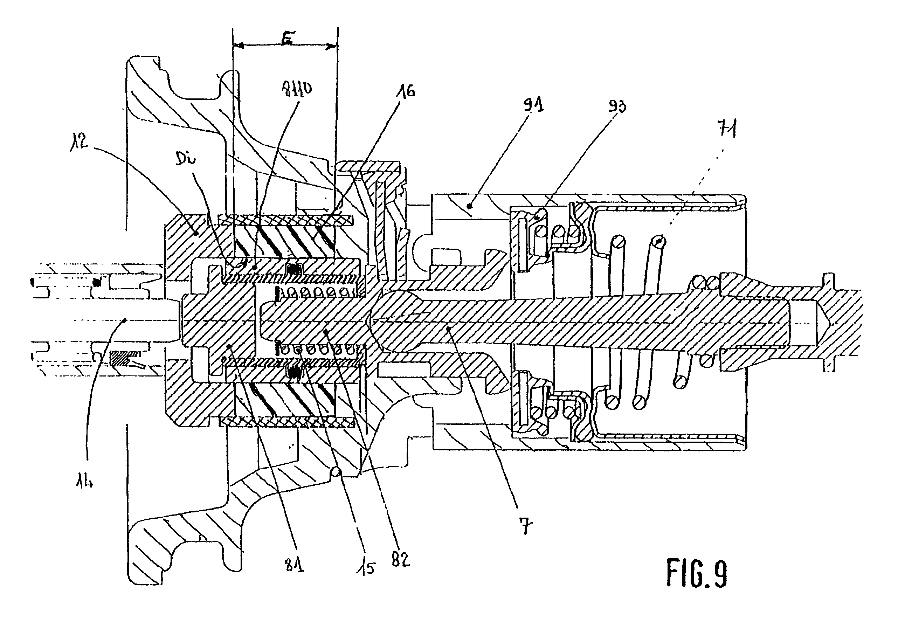

Lorsque-la-pédale de frein (non représentée) est progressivement relâchée, et bien que la force d'entrée Fe diminue (figure 8), l'épaulement 810 reste prisonnier de l'insert ou des inserts 17 aussi longtemps que le siège 92 du clapet ne décolle pas l'obturateur 93 du siège fixe 91, de sorte qu'une force d'assistance maximale continue d'être appliquée au maître-cylindre 20 pendant cette phase de défreinage.

Cette force d'assistance ne cesse en fait d'être appliquée que lorsque le siège 92 du clapet a suffisamment reculé suivant la direction X- pour décoller l'obturateur 93 du siège fixe 91, la chambre arrière 4 étant alors à nouveau reliée à la chambre avant 3.

Dans le mode de réalisation de la Figure 9, les moyens de retenue comprennent un manchon rigide 8110 disposé à l'intérieur d'un manchon élastique 16 qui délimite un logement propre à emprisonner le manchon rigide 8110 lorsque la force d'assistance Fa dépasse le seuil S déterminé alors que la tige de commande 7 est dans sa position d'actionnement extrême.

Grâce à l'invention, il est ainsi possible de maintenir grand ouvert le clapet 9 pendant la plus grande partie de la phase de défreinage qui suit un freinage d'urgence, donc de continuer à appliquer une force de freinage très supérieure à celle qui serait obtenue, sans l'invention, par l'effort de freinage réellement fourni par le conducteur.

## Revendications

1. Servomoteur pneumatique d'assistance au freinage comprenant : une enveloppe rigide (1); une cloison mobile (2) délimitant, de façon étanche, une chambre avant (3) et une chambre arrière (4) à l'intérieur de l'enveloppe (1), la chambre avant (3) étant en fonctionnement soumise à une première pression (Pd) et la chambre arrière (4) étant sélectivement reliée à la chambre avant (3) ou soumise à une seconde pression (Pa) supérieure à la première (Pd); un piston pneumatique (5) se déplaçant avec la cloison mobile (2); une tige de commande (7) se déplaçant dans le piston (5) en fonction d'une force d'entrée (Fe) sélectivement exercée suivant une direction axiale d'actionnement (X+) orientée vers la chambre avant (3), et d'une force de rappel (Fr) exercée par un ressort principal (71) suivant une direction axiale de retour (X-), inverse de la direction axiale d'actionnement (X+), la force de rappel (Fr) sollicitant la tige de commande (7) vers une position de retour, et la force d'entrée (Fe) sollicitant la tige de commande (7) vers une position d'actionnement intermédiaire ou vers une position d'actionnement extrême, selon que la force d'entrée (Fe) est appliquée à une vitesse inférieure ou supérieure à une vitesse -limite déterminée; un plongeur (8) logé dans le piston (5) et entraîné par la tige de commande (7); un clapet à trois voies (9) comprenant lui-même un siège annulaire (92) porté par une section arrière (82) du plongeur (8), ce clapet (9) reliant la chambre arrière (4) à la chambre avant (3) lorsque la tige de commande (7) est en position de repos, et soumettant la chambre arrière (4) à la seconde pression (Pa) lorsque la tige de commande (7) est dans l'une de ses positions d'actionnement; des moyens de transmission de force (10, 11, 12, 13, 14) propres à recevoir et transmettre au moins une force d'assistance (Fa) exercée par une face avant (51) du piston (5) lorsque le clapet (9) soumet la chambre arrière (4) à la seconde pression (Pa), ces moyens de transmission de force comprenant eux-mêmes des moyens de réaction (13, 14) propres à opposer à la force d'entrée (Fe) une réaction dépendant de la force d'assistance (Fa), le plongeur (8) comportant une section avant (81) reliée à la section arrière (82) par un ressort secondaire (15) **caractérisé en ce que** ledit ressort exerce entre les sections avant et arrière (81, 82) une force de contact mutuel (Fc) inférieure à la force de rappel (Fr), et **en ce que** la section avant (81) et les moyens de transmission de force (10, 11, 12, 13, 14) comprennent des moyens respectifs de retenue réversible (16, 17, 101, 810, 811, 8110) propres à assujettir la section avant (81) au piston lorsque la force d'assistance (Fa) dépasse un seuil (S) déterminé alors que la tige de commande (7) est dans sa position d'actionnement extrême.

2. Servomoteur suivant la revendication 1, **caractérisé en ce que** les moyens de retenue (16, 17, 101, 810, 811, 8110) comprennent une couche annulaire élastique (16) axialement soumise à la force d'assistance (Fa), cette couche (16) présentant une épaisseur axiale (E) et un diamètre interne (Di) d'autant plus faibles que la force d'assistance (Fa) est élevée.

3. Servomoteur suivant la revendication 2, **caractérisé en ce que** les moyens de réaction (13, 14) comprennent un disque de réaction (13) en matériau élastomère, **en ce que** les moyens de retenue (16, 17, 101, 810, 811, 8110) comprennent un disque rigide (811) constituant une face frontale de la section avant (81) du plongeur (8), et **en ce que** la couche annulaire (16) est constituée d'une surépaisseur du disque de réaction (13) qui délimite, dans le disque de réaction, un logement (101) propre à emprisonner le disque rigide (811) lorsque la force d'assistance (Fa) dépasse le seuil (S) déterminé alors que la tige de commande (7) est dans sa position d'actionnement extrême.

4. Servomoteur suivant la revendication 3, **caractérisé en ce que** le logement (101) et le disque rigide (811) ont des formes tronconiques complémentaires.

5. Servomoteur suivant l'une quelconque des revendications précédentes, **caractérisé en ce que** la section avant (81) a une forme externe au moins partiellement cylindrique, et **en ce que** les moyens de retenue (16, 17, 101, 810, 811, 8110) comprennent un épaulement (810) de la forme externe de la section avant.

6. Servomoteur suivant l'ensemble des revendications 2 et 5, **caractérisé en ce que** les moyens de retenue (16, 17, 101, 810, 811, 8110) comprennent un insert rigide (17) disposé dans la couche annulaire élastique (16) et coopérant avec l'épaulement (810) de la forme externe de la section avant (81) pour rendre la section avant (81) solidaire du piston (5) lorsque la force d'assistance (Fa) dépasse le seuil (S) déterminé alors que la tige de commande (7) est dans sa position d'actionnement extrême.

7. Servomoteur suivant la revendication 2, **caractérisé en ce que** les moyens de retenue (16, 17, 101, 810, 811, 8110) comprennent un manchon rigide (8110) disposé à l'intérieur d'un manchon élastique (16) qui délimite un logement propre à emprisonner le manchon rigide (8110) lorsque la force d'assistance (Fa) dépasse le seuil (S) déterminé alors que la tige de commande (7) est dans sa position d'actionnement extrême.

## Patentansprüche

1. Pneumatischer Servomotor zur Bremsunterstützung, enthaltend: ein starres Gehäuse (1); eine bewegliche Wand (2), die innerhalb des Gehäuses (1) eine vordere Kammer (3) und eine hintere Kammer (4) in dichter Weise abgrenzt, wobei die vordere Kammer (3) im Betrieb einem ersten Druck (Pd) unterliegt und die hintere Kammer (4) selektiv mit der vorderen Kammer (3) verbunden ist oder einem zweiten Druck (Pa) unterliegt, der höher ist als der erste (Pd); einen Pneumatikkolben (5), der sich mit der beweglichen Wand (2) verlagert; eine Steuerstange (7), die sich im Kolben (5) in Abhängigkeit von einer Eingangskraft (Fe) verlagert, welche selektiv in einer zur vorderen Kammer (3) gerichteten axialen Betätigungsrichtung (X+) ausgeübt wird, sowie von einer Rückstellkraft (Fr), die von einer Hauptfeder (71) in einer axialen Rückkehrrichtung (X-) ausgeübt wird, welche der axialen Betätigungsrichtung (X+) entgegensetzt ist, wobei die Rückstellkraft (Fr) die Steuerstange (7) in eine Rückkehrstellung beaufschlagt und die Eingangskraft (Fe) die Steuerstange (7) in eine Betätigungszwischenstellung oder in eine Betätigungsendstellung beaufschlagt, je nachdem, ob die Eingangskraft (Fe) mit einer geringeren oder höheren Geschwindigkeit als eine bestimmte Grenzgeschwindigkeit eingeleitet wird; einen Tauchkolben (8), der im Kolben (5) aufgenommen ist und von der Steuerstange (7) mitgenommen wird; ein Dreiwegeventil (9), das selbst einen ringförmigen Sitz (82) enthält, der von einem hinteren Abschnitt (82) des Tauchkolbens (8) getragen wird, wobei dieses Ventil (9) die hintere Kammer (4) mit der vorderen Kammer dann verbindet, wenn die Steuerstange (7) sich in Ruhestellung befindet, und die hintere Kammer (4) dem zweiten Druck (Pa) dann aussetzt, wenn die Steuerstange (7) sich in einer ihrer Betätigungsstellungen befindet; Kraftübertragungsmittel (10, 11, 12, 13, 14), die zumindest eine Unterstützungskraft (Fa) aufnehmen und übertragen können, welche von einer Vorderseite (51) des Kolbens (5) ausgeübt wird, wenn das Ventil (9) die hintere Kammer (4) dem zweiten Druck (Pa) aussetzt, wobei diese Kraftübertragungsmittel ihrerseits Reaktionsmittel (13, 14) enthalten, die der Eingangskraft (Fe) eine Reaktion entgegensetzen können, die von der Unterstützungskraft (Fa) abhängt, wobei der Tauchkolben (8) einen vorderen Abschnitt (81) enthält, der über eine Nebenfeder (15) mit dem hinteren Abschnitt (82) verbunden ist, **dadurch gekennzeichnet, dass** die genannte Feder zwischen dem vorderen und dem hinteren Abschnitt (81, 82) eine Kraft (Fc) zum gegenseitigen Kontakt ausübt, die kleiner ist als die Rückstellkraft (Fr), und dass der vordere Abschnitt (81) und die Kraftübertragungsmittel (10, 11, 12, 13, 14) jeweilige umsteuerbare Haltemittel (16, 17, 101, 810, 811, 8110) enthalten, welche den vorderen Abschnitt (81) mit dem Kolben verbinden können, wenn die Unterstützungskraft (Fa) einen bestimmten Schwellwert (S) übersteigt, während die Steuerstange (7) sich in ihrer Betätigungsendstellung befindet.

2. Servomotor nach Anspruch 1, **dadurch gekennzeichnet, dass** die Haltemittel (16, 17, 101, 810, 811, 8110) eine elastische, ringförmige Schicht (16) enthalten, die axial der Unterstützungskraft (Fa) unterworfen ist, wobei diese Schicht (16) eine axiale Dicke (E) und einen Innendurchmesser (Di) aufweist, die um so geringer sind, je höher die ünterstützungskraft (Fa) ist.

3. Servomotor nach Anspruch 2, **dadurch gekennzeichnet, dass** die Reaktionsmittel (13, 14) eine Reaktionsscheibe (13) aus Elastomer enthalten, dass die Haltemittel (16, 17, 101, 810, 811, 8110) eine starre Scheibe (811) enthalten, die eine Stirnseite des vorderen Abschnitts (81) des Tauchkolbens (8) bildet, und dass die ringförmige Schicht (16) aus einer Überdicke der Reaktionsscheibe (13) besteht, welche in der Reaktionsscheibe eine Aufnahme (101) abgrenzt, welche die starre Scheibe (811) dann umschließen kann, wenn die Unterstützungskraft (Fa) einen bestimmten Schwellwert (S) übersteigt, während die Steuerstange (7) sich in ihrer Betätigungsendstellung befindet.

4. Servomotor nach Anspruch 3, **dadurch gekennzeichnet, dass** die Aufnahme (101) und die starre Scheibe (811) komplementäre Kegelstumpfformen haben.

5. Servomotor nach einem der vorangehenden Ansprüche, **dadurch gekennzeichnet, dass** der vordere Abschnitt (81) eine zumindest teilweise zylindrische Außenform hat und dass die Haltemittel (16, 17, 101, 810, 811, 8110) eine Schulter (810) mit der Außenform des vorderen Abschnitts enthalten.

6. Servomotor nach Anspruch 2 und 5 in Kombination, **dadurch gekennzeichnet, dass** die Haltemittel (16, 17, 101, 810, 811, 8110) einen starren Einsatz (17) enthalten, der in der elastischen ringförmigen Schicht (16) angeordnet ist und mit der Schulter (810) mit der Außenform des vorderen Abschnitts (81) zusammenwirkt, um den vorderen Abschnitt (81) fest mit dem Kolben (5) zu verbinden, wenn die Unterstützungskraft (Fa) den bestimmten Schwellwert (S) übersteigt, während die Steuerstange (7) sich in ihrer Betätigungsendstellung befindet.

7. Servomotor nach Anspruch 2, **dadurch gekennzeichnet, dass** die Haltemittel (16, 17, 101, 810, 8110, 8110) einen starren Stutzen (8110) enthalten, der innerhalb eines elastischen Stutzens (16) angeordnet ist, der eine Aufnahme eingrenzt, welche den starren Stutzen (8110) umschließen kann, wenn die Unterstützungskraft (Fa) den bestimmten Schwellwert (S) übersteigt, während die Steuerstange (7) sich in ihrer Betätigungsendstellung befindet.

## Claims

1. Pneumatic brake-booster comprising: a rigid casing (1); a moving partition (2) delimiting, in leaktight fashion, a front chamber (3) and a rear chamber (4) inside the casing (1), the front chamber (3) in operation being subjected to a first pressure (Pd) and the rear chamber (4) being selectively connected to the front chamber (3) or subjected to a second pressure (Pa) higher than the first (Pd); a pneumatic piston (5) moving with the moving partition (2); an operating rod (7) moving in the piston (5) as a function of an input force (Fe) selectively exerted in an axial actuating direction (X+) orientated towards the front chamber (3), and of a return force (Fr) exerted by a main spring (71) in an axial return direction (X-) which is the opposite of the axial actuating direction (X+), the return force (Fr) urging the operating rod (7) into a return position, and the input force (Fe) urging the operating rod (7) into an intermediate actuating position or into an extreme actuating position, depending on whether the input force (Fe) is applied at a rate that is lower or higher than a determined limiting rate; a plunger (8) housed in the piston (5) and driven along by the operating rod (7) ; a three-way valve (9) itself comprising an annular seat (92) borne by a rear section (82) of the plunger (8), this valve (9) connecting the rear chamber (4) to the front chamber (3) when the operating rod (7) is in the position of rest, and subjecting the rear chamber (4) to the second pressure (Pa) when the operating rod (7) is in one of its actuating positions; force-transmission means (10, 11, 12, 13, 14) capable of receiving and of transmitting at least a boost force (Fa) exerted by a front face (51) of the piston (5) when the valve (9) subjects the rear chamber (4) to the second pressure (Pa), these force-transmission means themselves comprising reaction means (13, 14) capable of reacting against the input force (Fe) with a reaction force that depends on the boost force (Fa), the plunger (8) comprising a front section (81) connected to the rear section (82) by a secondary spring (15) **characterized in that** the said ressort exerts between the front and rear sections (81, 82), a mutual-contact force (Fc) that is lower than the return force (Fr), and **in that** the front section (81) and the force-transmission means (10, 11, 12, 13, 14) comprise respective reversible retention means (16, 17, 101, 810, 811, 8110) capable of securing the front section (81) to the piston when the boost force (Fa) exceeds a determined threshold (S) while the operating rod (7) is in its extreme actuating position.

2. Booster according to Claim 1, **characterized in that** the retention means (16, 17, 101, 810, 811) comprise an elastic annular layer (16) axially subjected to the boost force (Fa), this layer (16) having an axial thickness (E) and an inside diameter (Di) which are smaller, the higher the boost force (Fa) .

3. Booster according to Claim 2, **characterized in that** the reaction means (13, 14) comprise a reaction disc (13) made of elastomeric material, **in that** the retention means (16, 17, 101, 810, 811, 8110) comprise a rigid disc (811) constituting a front face of the front section (81) of the plunger (8), and **in that** the annular layer (16) consists of a thickening of the reaction disc (13) which delimits, in the reaction disc, a housing (101) capable of trapping the rigid disc (811) when the boost force (Fa) exceeds the determined threshold (S) while the operating rod (7) is in its extreme actuating position.

4. Booster according to Claim 3, **characterized in that** the housing (101) and the rigid disc (811) have complementary frustoconical shapes.

5. Booster according to any one of the preceding claims, **characterized in that** the front section (81) has an at least partially cylindrical external shape, and **in that** the retention means (16, 17, 101, 810, 811, 8110) comprise a shoulder (810) with the external shape of the front section.

6. Booster according to both of Claims 2 and 5, **characterized in that** the retention means (16, 17, 101, 810, 811, 8110) comprise a rigid insert (17) located in the elastic annular layer (16) and interacting with the shoulder (810) with the external shape of the front section (81) in order to combine the front section (81) with the piston (5) when the boost force (Fa) exceeds the determined threshold (S) while the operating rod (7) is in its extreme actuating position.

7. Booster according to claim 2, **characterized in that** the retention means (16, 17, 101, 810, 811, 8110) comprise a rigid sleeve (8110) located inside an elastic sleeve delimiting a housing able to keep the rigid sleeve (8110) when the boost force (Fa) exceeds the determined threshold (S) while the operating rod (7) is in its extreme actuating position.
